# EUROPEAN PATENT SPECIFICATION

(11) **EP 2 654 241 B1**
(45) Date of publication and mention of the grant of the patent: **23.01.2019**
(21) Application number: 11849784.1
(22) Date of filing: 22.11.2011
(51) Int. Cl.: H04L 12/24

(54) **METHOD AND SYSTEM FOR REALIZING LOOPBACK CONTROL THROUGH CONTROL PLANE**
VERFAHREN UND SYSTEM ZUR DURCHFÜHRUNG EINER PRÜFSCHLEIFENKONTROLLE ÜBER EINE KONTROLLEBENE
PROCÉDÉ ET SYSTÈME POUR RÉALISER UN CONTRÔLE EN BOUCLE VIA UN PLAN DE CONTRÔLE

(30) Priority: 17.12.2010 CN 201010594265
(43) Date of publication of application: 23.10.2013
(73) Proprietor: ZTE Corporation, Shenzhen, Guangdong 518057 (CN)
(72) Inventor: ZHANG, Fei, Shenzhen Guangdong 518057 (CN); WU, Bo, Shenzhen Guangdong 518057 (CN); XIAO, Min, Shenzhen Guangdong 518057 (CN)
(74) Representative: RGTH
(86) International application number: PCT/CN2011/082593
(87) International publication number: WO 2012/079444

(56) References cited:
- CN-A- 101 505 240
- ANSORGE D PAPADIMITRIOU G GRAMMEL J JONES ALCATEL J LANG CALIENT S: "LMP Extensions for Sonet and SDH; draft-ansorge-ccamp-lmp-sonet-sdh-00.txt", 20011101, 1 November 2001 (2001-11-01), XP015010191, ISSN: 0000-0004
- "3 rd Generation Partnership Project (3GPP) Technical Specification Group (TSG) Terminal Logical Test Interface (FDD); Special conformance testing functions", 3GPP DRAFT; T1-99050 (REVISION MARKS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. T WG1, no. Paris, France; 19990413 - 19990415 21 April 1999 (1999-04-21), XP050842578, Retrieved from the Internet: URL:http://www.3gpp.org/ftp/tsg_t/WG1_Test /TSGT1_02/Docs/ [retrieved on 1999-04-21]
- KOHEI SHIOMOTO (NTT) RAJIV PAPNEJA (ISOCORE) RICHARD RABBAT (FUJITSU): "Addressing and Messaging in Generalized Multi-Protocol Label Switching (GMPLS) Networks: Best Practices; draft-shiomoto-ccamp-gmpls-addressing-00.t xt", 20050101, 1 January 2005 (2005-01-01), XP015039686, ISSN: 0000-0004
- "Technical Report DSL Forum TR-101 ; liaison-dslf-tr-101-1006", IEEE DRAFT; LIAISON-DSLF-TR-101-1006, IEEE-SA, PISCATAWAY, NJ USA, vol. 802.1, 4 October 2006 (2006-10-04), pages 1-101, XP068006822, [retrieved on 2006-10-04]
- K. HEDAYAT ET AL.: 'An Extension to the Session Description Protocol (SDP) for Media Loopback' IETF, [Online] 20 October 2004, XP015037943 Retrieved from the Internet: <URL:tools.ietf.org/id/draft-hedayat-media- loopback-01.txt> [retrieved on 2012-02-05]
- YAN, BINFENG ET AL.: 'An IMS Based Video Phone System' MOBILE COMMUNICATIONS vol. 31, no. 2-3, 31 March 2007, pages 49 - 53, XP008170914

## Description

### TECHNICAL FIELD

The disclosure relates to the field of communications, in particular to a method and a system for realizing loopback (LB) control through a control plane.

### BACKGROUND

In the Internet Protocol (IP)/Multi Protocol Label Switch (MPLS), Multi Protocol Label Switch-Transport Profile (MPLS-TP), General Multi Protocol Label Switch (GMPLS) networks and the like of data communication, the transmission of a user data stream is encapsulated in a Label Switch Path (LSP) or a Pseudo Wire (PW). The LSP exists between two Label Switch Routers (LSRs) and adopts the Resource Reservation Verification Protocol-Traffic Engineering (RSVP-TE) in a signalling process, wherein a unidirectional LSP can be established based on a solution described in RFC3209, and a bidirectional LSP can be established based on a solution described in RFC3473.

In the network, a data stream can be born on an LSP. To ensure the quality of service, Operation Administration Maintenance (OAM) must be executed in these transmission pipes. The OAM can be divided into two kinds including a proactive OAM and an on-demand OAM, and the proactive OAM has such functions as Continuity Check (CC), Connectivity Verification (CV), Packet Loss (PL), Packet Delay (PD), Remote Defect Instruction (RDI), alarm reporting, lock reporting, and Client Failure Instruction (CFI), and the on-demand OAM has such functions as CV, PD, PL, route tracing and diagnostic test (LB). These OAM functions can be statically configured by a network administrator and can also be configured and enabled through a control plane in the presence of the control plane. When configured through the control plane, the OAM functions can be configured well during the establishment of a pipeline.

The LB has two functions: LB and throughput test, wherein the LB can loop back services and OAM messages and can loop back at a Maintenance Intermediate Point (MIP) or a Maintenance End Point (MEP). There are two LB solutions for a data plane at present, one is to define a new Lock Instruction (LI)-LB message to lock the LSP at first, then make it at a LB status and finally loop back the test message; and the other one is to expand LSP ping to lock the LSP and make the LSP at a LB status and then loop back the test message.

However, on the aspect of function, the final data plane is only to loop back the test message, and the previous LI and LB instruction do not need to pass through the data plane, which is not always accessible, therefore, the LB cannot be realized if the data plane is inaccessible due to fault and the like, which may reduce the security of a LB service obviously.

In addition, the document "LMP Extensions for Sonet and SDH; draft-ansorge-ccamp-lmp-sonet-sdh-00.txt" (ANSORGE D PAPADIMITRIOU G GRAMMEL J JONES ALCATEL J LANG CALIENT S) provides extended definition of LMP (Link management protocol) with respect to standard SDH and SONET features, which relates to configuration for interfaces of SDH and SONET in a link layer.

### SUMMARY

In view of this, the main objective of the disclosure is to provide a method and a system for realizing LB control through a control plane, to ensure the security of a LB service.

To achieve the objective above, the technical scheme of the disclosure is realized as follows.

A method for realizing LB control through the control plane, includes:
a LB flag is expanded in an object format of the control plane; and a node is notified to realize the LB through the control plane based on the LB flag,
in the case that trigger the intermediate node to execute the LB, the method that the LB flag is expanded may be:
   a reserved field of a hop-attribute object or an Explicit Route Object (ERO) is expanded, and a LB flag B is newly defined therein to instruct to configure a LB function;
   in the case that trigger the end-to-end LB, the method that the LB flag is expanded may be:
      the LB flag B is expanded in an Admin_status object to instruct to configure a LB function.

Wherein, the process that the LB is realized may include:
transmitting a message, which is to trigger a node to execute the LB, with the expanded LB flag through the control plane; and
configuring the LB function by the node according to the received expanded LB flag.

Wherein, after the realization of the LB, the method may further include:
transmitting a message for ending the LB of the node through the control plane, and notifying the node to restore a normal data stream service.

A system for realizing LB control through the control plane, includes a LB flag expansion unit and a LB execution unit, wherein
the LB flag expansion unit is configured to expand a LB flag in an object format of the control plane; and
the LB execution unit is configured to notify a node to realize the LB through the control plane based on the LB flag,
when expanding the LB flag in the case that trigger the intermediate node to execute the LB, the LB flag expanding unit may be configured to:
expand a reserved field of a hop-attribute object or an ERO, and newly define a LB flag B therein to instruct to configure a LB function;
when expanding the LB flag in the case that trigger the end-to-end LB, the LB flag expanding unit is configured to:
   expand a LB flag B in an Admin_status object to instruct to configure a LB function.

Wherein, when realizing the LB, the LB execution unit may be configured to:
transmit a message, which is to trigger a node to execute the LB, with the expanded LB flag through the control plane; and
the node configures the LB function according to the received expanded LB flag.

Wherein, after the realization of the LB, the LB execution unit may be further configured to:
transmit a message for ending the LB of the node through the control plane, and notify the node to restore a normal data stream service.

The LB control is realized through the control plane, the method and the system of the disclosure both can ensure the security and convenience of the LB service.

### BRIEF DESCRIPTION OF THE DRAWINGS

Fig. 1 is a diagram showing the LB of an LSP;
Fig. 2 is a diagram of an Admin_status object format;
Fig. 3 is a diagram of a hop-attribute object format;
Fig. 4 is a diagram showing the flow of realizing a LB function through a control plane according to one embodiment of the disclosure; and
Fig. 5 is a diagram of a system for realizing a LB function through a control plane according to one embodiment of the disclosure.

### DETAILED DESCRIPTION

In general, a LB flag B can be expanded in an object format of a control plane, there are multiple specific expansion manners, such as:

In the case that trigger an intermediate node to execute the LB, a reserved field of a hop-attribute object or an ERO can be expanded and a LB flag B is newly defined therein to instruct to configure a LB function.

Or, in the case that trigger an end-to-end LB, a LB flag B can be expanded in an Admin_status object to instruct to configure a LB function.

Then, based on the LB flag, a node can be notified to realize the LB through the control plane. Specifically, the detailed operation process of realizing the LB function through the control plane can be described by the following two embodiments.

### Embodiment 1

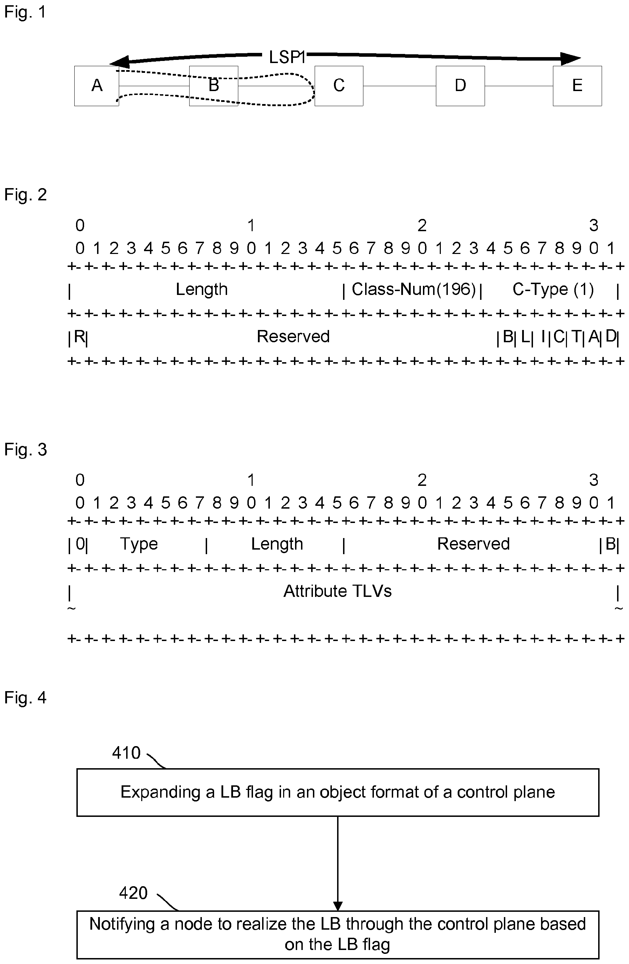

A path status request transmitted between nodes is realized through a path message in a Resource Reservation Protocol (RSVP) message and a feedback that an error occurs on the path status request is processed through a pathErr message in the RSVP message; a reservation status request transmitted between nodes is realized through a Resv message in the RSVP message and a feedback that an error occurs on the reservation status request is processed through a ResvErr message in the RSVP message. The Admin_status object can be included in the path and Resv messages to control the administration status of a connection. The GMPLS completes corresponding administration actions through a signalling to ensure that a network element in a connection channel may not make a wrong judgment on a fault event to trigger a switching action, with the format shown in Fig. 2.

See Fig. 1, which is a diagram showing the LB of an LSP. As shown in Fig. 1, a bidirectional LSP1 (A-B-C-D-E) exists in the network. At a moment, an administrator wants a service to be looped back at node C, the processing flow of the control plane is as follows:
(1) Node A disables an OAM alarm and then transmits a path refresh message to node E, wherein the message includes an Admin_status object, flags R and L are set.
(2) Node E disables the OAM alarm and locks the LSP after receiving the path message and identifying flag L. If the lock is successful, flag R of the Admin_status object is reset in the Resv message.
(3) Node A transmits a path refresh message, sets flag R, and flag B is set in the hop-attribute sub-object included in the ERO identifying node C to indicate that traffic will be looped back at node C. The format of the hop-attribute object is as shown in Fig. 3, and flag B is defined in the reserved field of the object here.
   Of course, no matter in embodiment 1 or embodiment 2, the reserved flag of the ERO and the like can be expanded rather than including flag B in the hop-attribute object.
(4) Each node checks the hop-attribute object after receiving the path message, and a pathErr message is transmitted to a head node if the flag cannot be identified. If the B is not set, it means that the LB is not executed at the node; if the B is set (with respect to node C), flag R in the Admin_status object is reset in the Resv message transmitted from node C to the head node, to indicate that a LB function has been well configured at the node through node C.
(5) node A identifies that flag R is reset after receiving the Resv message, the service traffic and OAM traffic can be started to loop back between nodes A and C.

At a subsequent moment, the administrator has completed the test for the LB of the connection and wants to restore a normal data stream service, the processing flow of the control plane is as follows:
(1) Node A transmits a path refresh message to node E, wherein the message includes an Admin_status object, a hop-attribute object is included in the ERO identifying node C, and the R is set but the B is reset.
(2) Node C confirms that the test for the LB function has been completed and resets flag R in the responded Resv message after receiving the path message and identifying that B is reset.
(3) Node A identifies that both the R and B are at a reset status and determines that the test for the LB function has been completed after receiving the Resv message, and transmits a path update message, wherein the R is set but the L is reset.
(4) Node C resets the R in corresponding Resv message after receiving the message so as to indicate that the node has removed the lock status, and enables the OAM alarm.
(5) Node A removes the lock status of the node, enables the OAM alarm and restores the transmission of service data and OAM messages after receiving the Resv message.

### Embodiment 2

As shown in Fig. 1, at a moment, an administrator wants a service to be looped back at point E (an end node of the LSP), the processing flow of the control plane is as follows:
(1) Node A disables an OAM alarm and then transmits a path message to node E, wherein the message includes an Admin_status object, and flags R and L are set.
(2) Node E disables the OAM alarm and locks the LSP after receiving the path message and identifying flag L. If the lock is successful, flag R of the Admin_status object is reset in the Resv message.
(3) Node A transmits a path refresh message and sets flag R, flag B is expanded in the Admin_status object to indicate that the data traffic of the LSP is to be looped back at an end node, and the flag is set.
(4) The end node (node E) checks the Admin_status object after receiving the path message, and transmits a pathErr message to a head node if the flag cannot be identified. If it is identified that the B is set, it means that the traffic will be looped back, then flag R in the Admin_status object is reset in the Resv message transmitted from the E to the head node to indicate that node E has configured the LB function well at the node.
(5) node A identifies that flag R is reset after receiving the Resv message, then the service traffic and OAM traffic can be started to loop back between the A and E.

At a subsequent moment, the administrator has completed the test for the LB of the connection and wants to restore the normal data stream service, the processing flow of the control plane is as follows:
(1) Node A transmits a path message to node E, wherein the message includes an Admin_status object, the R is set but the B is reset.
(2) Node C confirms that the test for the LB function has been completed and resets flag R in the responded Resv message after receiving the path message and identifying that the B is reset.
(3) Node A identifies that both the R and B are at a reset status after receiving the Resv message; transmits a path update message and set the R and reset the L.
(4) After receiving the message, node E enables the OAM alarm and resets the R in corresponding Resv message so as to indicate that the node has removed the lock status.
(5) After receiving the Resv message, node A enables the OAM alarm and removes the lock status of the node, restores the transmission of service data and OAM messages.

The commands involved in the technical description above can be issued by the control plane. Since the control plane is accessible eternally, so that no fault will occur and the security of the LB service can be effectively ensured. Furthermore, it is unnecessary to transmit OAM configuration messages in a data plane by configuring the LB function through the control plane, therefore, the LB service is more convenient and secure.

From the embodiments above, it is clear that the operation idea of realizing the LB function through the control plane in the disclosure can be as shown in Fig. 4. See Fig. 4, which is a diagram showing the flow of realizing the LB function through the control plane according to one embodiment of the disclosure, the flow includes the following steps:
Step 410: A LB flag is expanded in an object format of a control plane.
Step 420: Based on the LB flag, a node is notified through the control plane to realize the LB.

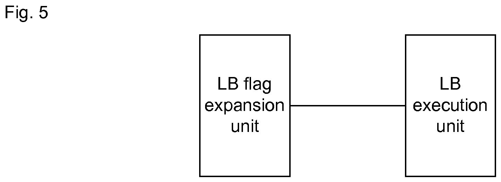

To ensure the smooth realization of the embodiments and operation ideas above, the setting as shown in Fig. 5 can be executed. See Fig. 5, which is a diagram of a system for realizing a LB function through a control plane according to one embodiment of the disclosure, the system includes a LB flag expansion unit and a LB execution unit which are connected.

In the actual application, the LB flag expansion unit can expand a LB flag in an object format of the control plane, and the LB execution unit can notify a node through a control plane to realize the LB based on the LB flag.

Furthermore, when expanding the LB flag, the LB flag expansion unit is configured to expand the LB flag in the object format of the control plane in the case that trigger an intermediate node to execute the LB and/or to trigger an end-to-end LB.

In the case that trigger the intermediate node to execute the LB, when expanding the LB flag, the LB flag expansion unit is specifically configured to: expand a reserved field of a hop-attribute object or an ERO, and newly define a LB flag B therein to instruct to configure a LB function; and
In the case that trigger the end-to-end LB, when expanding the LB flag, the LB flag expansion unit is specifically configured to: expand a LB flag B in an Admin_status object to instruct to configure a LB function.

When realizing the LB, the LB execution unit is configured to transmit a message, which is to trigger a node to execute the LB, with the LB flag through the control plane; and the node configures the LB function according to the received LB flag.

After the realization of the LB, the LB execution unit is further configured to: transmit a message for ending the LB of the node through the control plane, and notify the node to restore the normal data stream service.

To sum up, through the method or the system, the disclosure can ensure the security and convenience of the LB service by the technology for realizing the LB function through the control plane.

## Claims

1. A method for realizing Loopback, LB, control through a control plane, comprising:
expanding (410) a LB flag in an object format of the control plane; and notifying (420) a node to realize the LB through the control plane based on the LB flag, **characterized in that**,
in the case of triggering an intermediate node to execute the LB, the process of expanding the LB flag comprises:
expanding a reserved field of a hop-attribute object or an Explicit Route Object, ERO, and newly defining a LB flag B therein to instruct to configure a LB function;
in the case of triggering an end-to-end LB, the process of expanding the LB flag comprises:
expanding the LB flag B in an Admin_status object to instruct to configure a LB function.

2. The method according to claim 1, the process of realizing the LB comprises:
transmitting a message, which is to trigger a node to execute the LB, with the expanded LB flag through the control plane; and
configuring the LB function by the node according to the received expanded LB flag.

3. The method according to claim 2, after the realization of the LB, further comprising:
transmitting a message for ending the LB of the node through the control plane, and notifying the node to restore a normal data stream service.

4. A system for realizing LB control through a control plane, comprises a LB flag expanding unit and a LB execution unit, wherein
the LB flag expansion unit is configured to expand a LB flag in an object format of the control plane; and
the LB execution unit is configured to notify a node to realize the LB through the control plane based on the LB flag, **characterized in that**,
when expanding the LB flag in the case of triggering an intermediate node to execute the LB, the LB flag expanding unit is configured to:
expand a reserved field of a hop-attribute object or an ERO, and newly define a LB flag B therein to instruct to configure a LB function;
when expanding the LB flag in the case of triggering an end-to-end LB, the LB flag expanding unit is configured to:
expand a LB flag B in an Admin_status object to instruct to configure a LB function.

5. The system according to claim 4, wherein when realizing the LB, the LB execution unit is configured to:
transmit a message, which is to trigger a node to execute the LB, with the expanded LB flag through the control plane; and
the node configures the LB function according to the received expanded LB flag.

6. The system according to claim 5, wherein after the realization of the LB, the LB execution unit is further configured to:
transmit a message for ending the LB of the node through the control plane, and notify the node to restore a normal data stream service.

## Patentansprüche

1. Verfahren zum Realisieren einer Loopback, LB, -Steuerung durch eine Steuerebene, umfassend:
Erweitern (410) eines LB-Flags in einem Objektformat der Steuerebene; und Benachrichtigen (420) eines Knotens, um den LB durch die Steuerebene basierend auf dem LB-Flag zu realisieren, **dadurch gekennzeichnet, dass**
im Fall des Auslösens eines Zwischenknotens zum Ausführen des LB umfasst der Prozess des Erweiterns des LB-Flags Folgendes:
Erweitern eines reservierten Felds eines Hop-Attributobjekts oder eines Expliziten Routenobjekts, ERO, und Neudefinieren eines LB-Flags B darin, die Konfiguration einer LB-Funktion anzuweisen;
Im Fall des Auslösens einer End-to-End LB umfasst der Prozess des Erweiterns des LB-Flags Folgendes:
Erweitern des LB-Flags B in einem Admin_status-Objekt, um die Konfiguration einer LB-Funktion anzuweisen.

2. Verfahren gemäß Anspruch 1, wobei der Prozess des Realisierens des LBs Folgendes umfasst:
Übertragen einer Nachricht, die einen Knoten zum Ausführen des LBs auslösen soll, mit dem erweiterten LB-Flag durch die Steuerebene; und
Konfigurieren der LB-Funktion durch den Knoten gemäß dem empfangenen erweiterten LB-Flag.

3. Verfahren gemäß Anspruch 2, nach der Realisierung des LBs, ferner umfassend:
Übertragen einer Nachricht zum Beenden des LBs des Knotens durch die Steuerebene und Benachrichtigen des Knotens, um einen normalen Datenstromdienst wiederherzustellen.

4. System zum Realisieren einer LB-Steuerung durch eine Steuerebene umfassend eine LB-Flag-Erweiterungseinheit und eine LB-Ausführungseinheit, wobei
die LB-Flag-Erweiterungseinheit zum Erweitern eines LB-Flags in einem Objektformat der Steuerebene konfiguriert ist; und
die LB-Ausführungseinheit zur Benachrichtigung eines Knotens konfiguriert ist, um den LB durch die Steuerebene basierend auf dem LB-Flag zu realisieren, **dadurch gekennzeichnet, dass**
beim Erweitern des LB-Flags im Fall des Auslösens eines Zwischenknotens zum Ausführen des LBs die LB-Flag-Erweiterungseinheit für Folgendes konfiguriert ist:
Erweitern eines reservierten Feldes eines Hop-Attributobjekts oder eines ERO, und Neudefinieren eines LB-Flag B darin, um die Konfiguration einer LB-Funktion anzuweisen;
beim Erweitern des LB-Flags im Fall des Auslösens eins End-to-End-LBs die LB-Flag-Erweiterungseinheit für Folgendes konfiguriert ist:
Erweitern eines LB-Flags B in einem Admin_status-Objekt, um anzuweisen eine LB-Funktion zu konfigurieren.

5. System gemäß Anspruch 4, wobei, wenn der LB realisiert wird, die LB-Ausführungseinheit für Folgendes konfiguriert ist:
Übertragen einer Nachricht, die einen Knoten zum Ausführen des LBs auslösen soll, mit dem erweiterten LB-Flag durch die Steuerebene; und
der Knoten konfiguriert die LB-Funktion gemäß dem empfangenen erweiterten LB-Flag.

6. System gemäß Anspruch 5, wobei nach der Realisierung des LBs die LB-Ausführungseinheit ferner für Folgendes konfiguriert ist:
Übertragen einer Nachricht zum Beenden der LB des Knotens durch die Steuerebene und Benachrichtigen des Knotens, um einen normalen Datenstromdienst wiederherzustellen.

## Revendications

1. Procédé de réalisation d'une commande de rebouclage, LB, par l'intermédiaire d'un plan de commande, comprenant :
l'expansion (410) d'un drapeau LB dans un format d'objet du plan de commande ; et
la notification (420) à un noeud de réaliser le LB par l'intermédiaire du plan de commande sur la base du drapeau LB, **caractérisé en ce que**
dans le cas du déclenchement d'un noeud intermédiaire pour exécuter le LB, le processus d'expansion du drapeau LB comprend :
l'expansion d'un champ réservé d'un objet d'attribut de saut ou d'un objet d'itinéraire explicite, ERO, et
la définition à nouveau d'un drapeau LB B à l'intérieur de celui-ci pour ordonner de configurer une fonction LB ;
dans le cas du déclenchement d'un LB de bout en bout, le processus d'expansion du drapeau LB comprend :
l'expansion du drapeau LB B dans un objet Admin_status pour ordonner de configurer une fonction LB.

2. Procédé selon la revendication 1, dans lequel le processus de réalisation du LB comprend :
la transmission d'un message, destiné au déclenchement d'un noeud pour exécuter le LB, avec le drapeau LB étendu par l'intermédiaire du plan de commande ; et
la configuration de la fonction LB par le noeud en fonction du drapeau LB étendu reçu.

3. Procédé selon la revendication 2, comprenant en outre, après la réalisation du LB :
la transmission d'un message pour terminer le LB du noeud par l'intermédiaire du plan de commande, et la notification au noeud de rétablir un service de flux de données normal.

4. Système de réalisation d'une commande LB par l'intermédiaire d'un plan de commande, comprenant une unité d'expansion de drapeau LB et une unité d'exécution de LB, dans lequel
l'unité d'expansion de drapeau LB est configurée pour effectuer l'expansion d'un drapeau LB dans un format d'objet du plan de commande ; et
l'unité d'exécution LB est configurée pour effectuer la notification à un noeud de réaliser le LB par l'intermédiaire du plan de commande sur la base du drapeau LB, **caractérisé en ce que**
lors de l'expansion du drapeau LB dans le cas du déclenchement d'un noeud intermédiaire pour exécuter le LB, l'unité d'expansion de drapeau LB est configurée pour effectuer :
l'expansion d'un champ réservé d'un objet d'attribut de saut ou d'un ERO, et la définition à nouveau d'un drapeau LB B à l'intérieur de celui-ci pour ordonner de configurer une fonction LB ;
lors de l'expansion du drapeau LB dans le cas du déclenchement d'un LB de bout en bout, l'unité d'expansion de drapeau LB est configurée pour effectuer :
l'expansion d'un drapeau LB B dans un objet Admin_status pour ordonner de configurer une fonction LB.

5. Système selon la revendication 4, dans lequel, lors de la réalisation du LB, l'unité d'exécution de LB est configurée pour effectuer :
la transmission d'un message, destiné au déclenchement d'un noeud pour exécuter le LB, avec le drapeau LB étendu par l'intermédiaire du plan de commande ; et
le noeud effectue la configuration de la fonction LB en fonction du drapeau LB étendu reçu.

6. Système selon la revendication 5, dans lequel l'unité d'exécution LB est en outre configurée pour effectuer, après la réalisation du LB :
la transmission d'un message pour terminer le LB du noeud par l'intermédiaire du plan de commande, et la notification au noeud de rétablir un service de flux de données normal.
